# EUROPEAN PATENT APPLICATION

(11) **EP 3 459 712 A1**
(43) Date of publication of application: **27.03.2019**
(21) Application number: 17192429.3
(22) Date of filing: 21.09.2017
(51) Int. Cl.: B29C 64/153, B29C 64/393, B33Y 50/02, B22F 3/105

(54) **APPARATUS FOR ADDITIVELY MANUFACTURING OF THREE-DIMENSIONAL OBJECTS**

(71) Applicant: CL Schutzrechtsverwaltungs GmbH, 96215 Lichtenfels (DE)
(72) Inventor: Pilzweger, Florian, 96215 Lichtenfels (DE); Zeulner, Fabian, 96215 Lichtenfels (DE)
(74) Representative: Hafner & Kohl

(57) **Abstract**

Apparatus (13) for additively manufacturing of three-dimensional objects (14) by means of successive layerwise selective irradiation and consolidation of layers of a build material (15) which can be consolidated by means of an energy beam (16), wherein the apparatus (13) comprises a measuring unit (1) configured to measure a path velocity of the energy beam (16) generated by a beam generating unit, wherein the measuring unit (1) comprises at least two measuring means (9, 10) located in measuring positions (3, 4) at a defined distance (5).

## Description

The invention relates to an apparatus for additively manufacturing of three-dimensional objects by means of successive layerwise selective irradiation and consolidation of layers of a build material which can be consolidated by means of an energy beam, wherein the apparatus comprises a measuring unit configured to measure a path velocity of the energy beam generated by a beam generating unit.

Apparatuses and processes for additively manufacturing of three-dimensional objects, wherein an energy beam selectively irradiates and thereby consolidates layers of the build material, are well-known from prior art. To assure that a defined process quality is met, various process parameters need to be monitored. For example, the velocity of the energy beam can be adjusted to regulate the energy input into the build material via the energy beam and to adapt the "writing-speed" of the apparatus and thus, the time required for a layer of build material to be irradiated.

To determine the velocity of the energy beam, typically, a line is irradiated on a sample, in particular a sheet-metal, wherein the time required for irradiating the line and the length of the line are determined. Thus, the velocity or path velocity, respectively of the energy beam can be measured or calculated, respectively, based on the length of the line and the time required for irradiating the line. Disadvantageously, the irradiation of the sheet-metal is laborious and imprecisions occur due to acceleration times and deceleration times when deflecting the energy beam at the start and at the end of the line irradiated on the sample.

Therefore, it is an object of the present invention to provide an apparatus, wherein the measurement of the velocity or path velocity, respectively of the energy beam is improved.

The object is achieved by an apparatus according to claim 1. Advantageous embodiments of the apparatus are subject to the dependent claims.

The apparatus described herein is an apparatus for additively manufacturing three-dimensional objects, e.g. technical components, by means of successive layerwise selective irradiation and consolidation of layers of a powdered build material ("build material") which can be consolidated by means of an energy beam. A respective build material can be a metal, ceramic or polymer powder. A respective energy beam can be a laser beam or an electronic beam. A respective apparatus can be a selective laser sintering apparatus, a selective laser melting apparatus or a selective electron beam melting apparatus, for instance. The energy beam is deflected via a scanning unit or a beam deflection unit, wherein the energy beam can be guided in that a selective irradiation of the corresponding layers of build material can be irradiated.

The apparatus comprises a number of functional units which are used during its operation. Exemplary functional units are a process chamber, an irradiation device which is configured to selectively irradiate a build material layer disposed in the process chamber with at least one energy beam, and a stream generating device which is configured to generate a gaseous fluid stream at least partly streaming through the process chamber with given streaming properties, e.g. a given streaming profile, streaming velocity, etc. The gaseous fluid stream is capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc.

The invention is based on the idea that the measuring unit comprises at least two measuring means located in measuring positions at a defined distance (relative to each other). Thus, the energy beam can be moved along the path, wherein the path velocity of the energy beam can be determined based on the time the energy beam travels (the path) between the at least two measuring positions. In particular, the path the energy beam travels is a line connecting the two measuring positions. Since the two measuring positions are located at a defined distance, the length of the path the energy beam travels is set, so that the determination of the path velocity is reduced to a measurement of the time the energy beam requires to travel from the first measuring position to the second measuring position.

Hence, it is not necessary to irradiate a sample, wherein the length of the path on the sample and the time required to irradiate the sample need to be measured. As the length of the path is already set by the at least two measuring positions the energy beam can be moved constantly along a path containing the at least two measuring positions, so that acceleration times and deceleration times of the energy beam do not falsify the determination of the path velocity.

In particular, the at least one measuring position may be located in a fixed position inside a process chamber, in particular in a build plane. The build plane is the plane in which the build material can be directly irradiated and consolidated via the energy beam. In other words, the energy beam can be deflected or guided in that build material in any section of the build plane can be irradiated. Alternatively or additionally at least one measuring position may be located on a component of the apparatus, in particular an application unit, e.g. a coater. The current position and/or a current movement of the component of the apparatus may be taken into calculation, in that the path velocity of the energy beam may be determined. The term "process chamber" refers to the chamber in which at least a part of the manufacturing process, in particular the irradiation of build material, is performed. By locating the measuring positions in the build plane and/or on a component of the apparatus, there is no need for adjusting the energy beam, for example changing the focus for an out of plane irradiation of a sample. Therefore, it is possible, to measure the path velocity in the same setup that is used to manufacture three-dimensional objects, since there is no need to use a test setup or change the manufacturing setup.

The apparatus can be improved in that the measuring positions may be located in a build plate of the apparatus or the measuring positions are located in a structure element insertable or inserted in the apparatus (during measurement). According to the first alternative, the at least two measuring positions are located in a build plate of the apparatus. The build plate is the plate assigned to the build chamber of the apparatus that carries the build material and/or the object that is currently being built. By integrating the measuring positions into the build plate it is possible to determine or measure the path velocity before the manufacturing process begins without the need for changing the manufacturing setup.

Alternatively, it is possible, to provide a structure element in which the measuring positions are located, wherein the structure element is insertable or inserted into the apparatus, in particular in the process chamber of the apparatus. The structure element can therefore, be regarded as a separate element that can be used to determine the path velocity of the energy beam and can be removed from the apparatus afterwards. Preferably, the structure element can be positioned on the build plate of the apparatus and the build plate can be moved to a position in that the structure element or the measuring positions of the structure element are located in the build plane. The structure element may be built plate like or as a plate which provides the measuring position, for example the structure element may be built as a metal plate receiving the measuring means.

According to another embodiment of the apparatus, the measuring means are configured to generate a measuring signal upon irradiation by an energy beam or by the energy beam. Thus, when an energy beam is moved over the measuring means, i.e. travels over the measuring means while irradiating the measuring means, a measuring signal is generated by the measuring means. Generally, an additional beam generating means may be provided to generate an energy beam for the measurement of the path velocity. It is also possible to use the energy beam provided for the irradiation of the build material for the measurement of the path velocity, too. Therefore, at least two measuring signals are generated by the energy beam irradiating a path containing the at least two measuring means in the at least two measuring positions. Thus, a time measurement can be started upon the irradiation of the first measuring means and the time measurement can be stopped upon irradiation of the last measuring means assigned to the path segment the path velocity has to be determined. For example, the apparatus may comprise two measuring means located in two measuring positions. To measure the path velocity the energy beam travels along the path between the two measuring positions, wherein the energy beam is moved over the two measuring positions. The time the energy beam travels between the two measuring positions can be measured as the time between the two measuring signals is recorded.

In particular, the measuring means are built as or comprise at least one sensor, in particular an optical sensor or photo-sensitive sensor, e.g. a photo diode, sensitive for radiation of a wavelength of the energy beam. Preferably, the sensor generates an electric signal upon irradiation with the energy beam. By having the sensor sensitive for only radiation of the specific wavelength of the energy beam accidental triggering of the sensors can be avoided. Of course, dependent on which energy beam is used, a sensor sensitive for at least one other wavelength may be provided to generate a signal upon corresponding irradiation.

The apparatus can be improved by providing a measuring unit that is configured to determine the time or the time difference between a generation of at least two signals by the energy beam irradiating the at least two measuring means in the at least two measuring positions and to determine, e.g. calculate, the corresponding path velocity of the energy beam based on the path of the energy beam between the at least two measuring positions and the determined time. The measuring unit measures the time difference between the generation of the two measuring signals. Afterwards, by having the defined distance between the two measuring positions the path velocity of the energy beam can be determined or calculated, respectively.

According to another embodiment of the apparatus, the build plate or the structure element, preferably arranged in the build plane, comprises at least two reception rooms located in the measuring positions, wherein the reception rooms are configured to receive the measuring means. The reception rooms can for example be built as recesses, bores, blind holes, etc. located in the build plate or the structure element in which the measuring means can be received.

The apparatus can further be improved by providing a plurality of measuring means and/or measuring positions distributed across the build plane. Thus, the path velocity of the energy beam can be measured or determined for a plurality of paths, in particular between two measuring positions in the build plane. It is also possible to determine the path velocity of a complex path that is put together from a plurality of segments with each segment starting and ending in a measuring position. It is also possible, to have a plurality of measuring positions or reception rooms in which the measuring means can be positioned, so that the measuring means can be positioned in or changed to the measuring position used for determining the path velocity. By way of this embodiment it is possible to arrange the at least two or multiple measuring means and/or multiple measuring positions in an arbitrary manner in the build plane. This allows for an arbitrary length of the path the path velocity of the energy beam is determined. Further, an arbitrary combination of different paths is possible. Together with the variation of the path length and/or the path orientation the time difference that is measured is varying. Thus, it is possible, to provide measurement routines in which longer path lengths or a combination of multiple paths is measured and routines in which short paths or shorter combinations of paths are measured.

Another advantageous embodiment of the apparatus suggests a filter unit that is arranged between at least one measuring means and the beam generating unit, wherein the filter unit is configured to dampen/weaken the energy beam to a defined degree and/or to filter radiation with wavelengths differing from the energy beam. By way of the filter unit it is made possible to avoid damaging or destroying the measuring means as the power of the energy beam can be reduced or weakened to a defined degree that is not harmful to the measuring means but ensures a generation of the measuring signal upon irradiation of the measuring means. The filter unit is preferably integrated into the reception room. The filter unit may be built as or comprise an optical filter element.

Further, radiation with wavelengths differing from the energy beam can be filtered to avoid a false triggering of the measuring means, for example by irradiation of the measuring means with radiation of a different source.

Besides, the invention relates to a measuring unit, in particular for an apparatus as described before, the measuring unit comprising at least two measuring means located in measuring positions at a defined distance. All details, features and advantages described with respect to the apparatus and/or the measuring unit are fully transferable to the measuring unit.

Additionally, the invention relates to a method for operating at least one apparatus for additively manufacturing three-dimensional objects by means of successive layerwise selective irradiation and consolidation of layers of a build material which can be consolidated by means of an energy beam, wherein a path velocity of the energy beam is determined via the measurement of time the energy beam requires to travel a defined distance from a first measuring position to at least one second measuring position. All details, features and advantages described with respect to the apparatus and/or the measuring unit are fully transferable to the method and vice versa.

Exemplary embodiments of the invention are described with reference to the Fig. The Fig. are schematic diagrams, wherein
- Fig. 1: shows a side view of an apparatus according to an exemplary embodiment;
- Fig. 2: shows a top view of a build plane of an inventive apparatus according to an exemplary embodiment; and
- Fig. 3: shows a side view of the apparatus of Fig. 1.

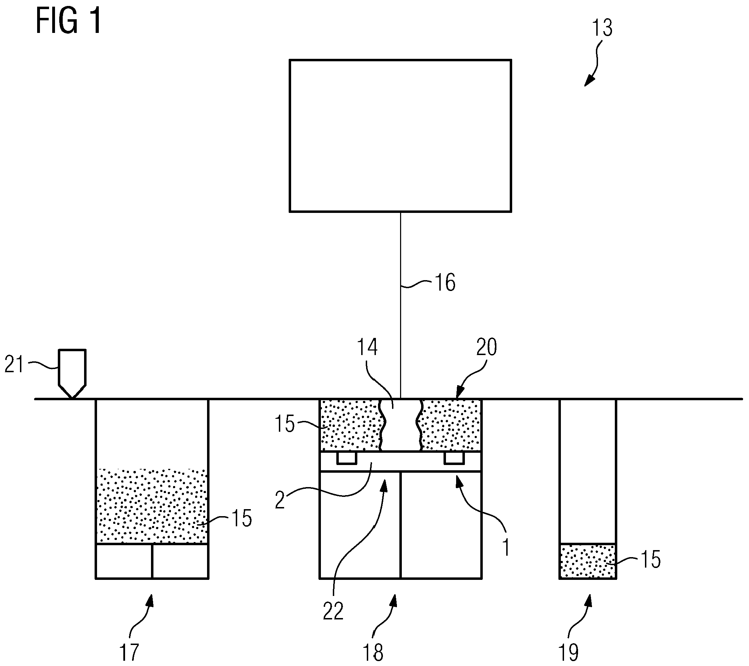

Fig. 1 shows an apparatus 13 for additively manufacturing of three-dimensional objects 14 by means of successive layerwise selective irradiation and consolidation of layers of a build material 15 which can be consolidated by means of an energy beam 16. The apparatus 13 comprises a dose module 17, a build module 18 and an overflow module 19. The build material 15 is applied onto a build plane 20 by an application unit 21, in particular a coater. After a layer of build material 15 is irradiated by the energy beam 16 a carrying unit 22 is lowered and another layer of build material 15 is applied by the application unit 21.

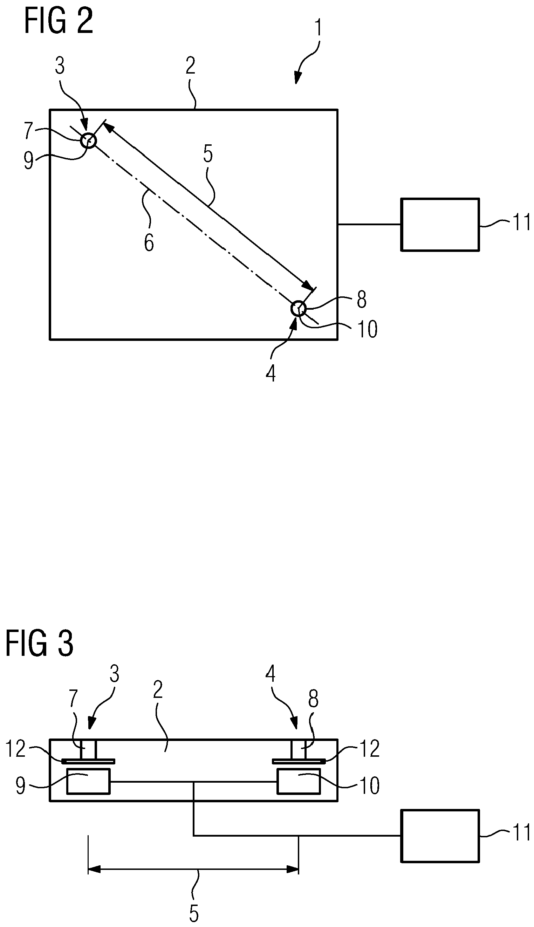

Fig. 2 shows a part of an apparatus 13 for additively manufacturing of three-dimensional objects 14 by means of successive layerwise selective irradiation and consolidation of layers of a build material 15 which can be consolidated by means of an energy beam 16 as shown in Fig. 1. The apparatus 13 comprises a measuring unit 1 configured to measure a path velocity of the energy beam 16 generated by a beam generating unit. In Fig. 2 a build plate 2 of the apparatus 13 is depicted, wherein the build plate 2 comprises two measuring positions 3, 4 arranged at a defined distance 5 along a path 6.

The build plate 2 comprises two reception rooms 7, 8 corresponding to the measuring positions 3, 4, wherein a measuring means, built as a sensor 9, 10, is received in each reception room 7, 8. Further, the measuring unit 1 comprises a control unit 11, wherein the signals of the sensors 9, 10 are received and where the calculation of the path velocity of the energy beam 16 is performed.

To measure the path velocity of the energy beam 16, the energy beam 16 is guided constantly along the path 6, wherein upon irradiation of the sensor 10 in the reception room 8 located in the measuring position 4 a measuring signal is generated and sent to the control unit 11. The time difference between the generation of the first measuring signal and the generation of a second measuring signal that is generated upon irradiation of the sensor 9 in the measuring position 3 is measured. Of course, it is also possible, to measure the path velocity with the energy beam 16 being guided from the measuring position 3 to the measuring position 4. As the defined distance 5 is known and the time difference between the generation of the two measuring signals is measured, the path velocity of the energy beam 16 between the measuring positions 3, 4 can be determined.

As can be derived from Fig. 3 the reception rooms 7, 8 are built as holes, in particular blind holes, in the build plate 2, wherein the energy beam 16 can irradiate the sensors 9, 10 in the reception rooms 7, 8. Further, filter units 12 are arranged in the reception rooms 7, 8 between the sensors 9, 10 and a beam generating unit (not shown). Thus, the energy beam 16 can be weakened in that damage of the sensors 9, 10 is avoided. Additionally, electromagnetic radiation entering the reception rooms 7, 8 is filtered in that only measurement signals upon irradiation with the energy beam 16 are generated.

## Claims

1. Apparatus (13) for additively manufacturing of three-dimensional objects (14) by means of successive layerwise selective irradiation and consolidation of layers of a build material (15) which can be consolidated by means of an energy beam (16), wherein the apparatus (13) comprises a measuring unit (1) configured to measure a path velocity of the energy beam (16) generated by a beam generating unit, **characterized in that** the measuring unit (1) comprises at least two measuring means (9, 10) located in measuring positions (3, 4) at a defined distance (5).

2. Apparatus according to claim 1, **characterized in that** at least one measuring position (3, 4) is located in a fixed position inside a process chamber, in particular in a build plane (20) and/or **in that** at least one measuring position (3, 4) is located on a component of the apparatus, in particular an application unit (21).

3. Apparatus according to claim 2, **characterized in that** the measuring positions (3, 4) are located in a build plate (2) of the apparatus (13) or the measuring positions (3, 4) are located in a structure element insertable in the apparatus (13).

4. Apparatus according to one of the preceding claims, **characterized in that** the measuring means (9, 10) are configured to generate a measuring signal upon irradiation by an energy beam or by the energy beam (16).

5. Apparatus according to one of the preceding claims, **characterized in that** the measuring means (9, 10) are built as or comprise at least one sensor, in particular a photo diode, sensitive for radiation of a wavelength of an energy beam or a wavelength of the energy beam (16).

6. Apparatus according to one of the preceding claims, **characterized by** a measuring unit (1) configured to determine the time or time difference between a generation of at least two signals by the energy beam (16) irradiating the at least two measuring means (9, 10) in the at least two measuring positions (3, 4) and to determine the corresponding path velocity of the energy beam (16) based on the path (6) of the energy beam (16) between the at least two measuring positions (3, 4) and the determined time.

7. Apparatus according to one of the preceding claims, **characterized in that** the build plate (2) or the structure element, preferably arranged in a build plane (20), comprises at least two reception rooms (7, 8) located in the measuring positions (3, 4), wherein the reception rooms (7, 8) are configured to receive the measuring means (9, 10).

8. Apparatus according to one of the claims 2 to 7, **characterized by** a plurality of, in particular more than two, measuring means (9, 10) and/or measuring positions (3, 4) distributed across the build plane (20).

9. Apparatus according to one of the preceding claims, **characterized by** a filter unit (12) arranged between at least one measuring means (9, 10) and the beam generating unit, wherein the filter unit (12) is configured to weaken the energy beam (16) to a defined degree and/or to filter radiation with wavelengths differing from the energy beam (16).

10. Measuring unit (1), in particular for an apparatus according to one of the preceding claims, comprising at least two measuring means (9, 10) locatable or located in measuring positions (3, 4) at a defined distance (5).

11. Method for operating at least one apparatus (13) for additively manufacturing three-dimensional objects (14) by means of successive layerwise selective irradiation and consolidation of layers of a build material (15) which can be consolidated by means of an energy beam (16), wherein a path velocity of the energy beam (16) is determined via the measurement of time the energy beam (16) requires to travel a defined distance (5) from a first measuring position (3, 4) to at least one second measuring position (3, 4).

12. Method according to claim 11, **characterized in that** the method is performed on an apparatus (13) according to one of the claims 1 to 9.
